# EUROPEAN PATENT APPLICATION

(11) **EP 3 454 268 A1**
(43) Date of publication of application: **13.03.2019**
(21) Application number: 18191652.9
(22) Date of filing: 30.08.2018
(51) Int. Cl.: G06Q 10/06

(54) **A GRAPHICAL PROJECT MANAGEMENT TOOL TECHNICAL FIELD**

(30) Priority: 08.09.2017 US 201762555700 P
(71) Applicant: Gliffy, Inc., San Francisco CA 94107 (US)
(72) Inventor: KREITLER, Jeremy, San Francisco, CA California 94107 (US); LEUNG, Edmund, San Francisco, CA California 94107 (US); FORD, Brian, San Francisco, CA California 94107 (US); LOPEZ, Kenny, San Francisco, CA California 94107 (US); LOYZA, Jun, San Francisco, CA California 94107 (US); PROSPERI, Zac, San Francisco, CA California 94107 (US)
(74) Representative: Hanna Moore + Curley

(57) **Abstract**

A graphical project management tool that takes a representational image as input and enables a user to define one or more "regions" of the image as a "hotspot". Tasks that are tracked by one or more project issue management tools can then be associated with the hotspot. The user can originate new tasks from within the tool, or may view a list of unassigned / unassociated tasks imported from the project management tool. The system also ensures that data internal to the graphical tool is kept in sync with data maintained by the management tool.

## Description

### TECHNICAL FIELD

This patent application relates to information technology and in particular to techniques for integrating a graphical image with task information maintained in a project management system.

### BACKGROUND

There are a number of software tools on the market that provide different ways to visually manage projects, tasks, and deliverables. These include LiquidPlanner, Wrike, Atlassian JIRA, Axosoft, Targetprocess, LeanKit, Casual, and others. These tools permit team members to manipulate schedules, create visuals such as Gantt charts, issue tracking tickets, and render visual displays of task status on scrum boards and the like.

U.S. Patent 8,037,453 describes a system that manages configuration, test, and builds for software developers. The system obtains source code from a repository and transforms the code into a "living build" having "artifacts". The "artifacts" may include object code resulting from the complied source code, build process documentation, libraries and the like. The drawings in this patent illustrate blocks connected by directional arrows. But these blocks represent the build process, job configuration, and source code repositories - and do not represent an underlying functional diagram of the software being developed; nor can open issues be associated with particular functional blocks.

U.S. Patent 8,819,617 describes a system that provides interactive manipulation and consolidated views of data retrieved from third-party software development tools. The data may be stored in a code repository. Releases, test plans, defect tracking tools, configuration management databases, etc. can be linked. However, as with the patent mentioned above, a functional block diagram of the underlying code is not presented nor can it be interacted with to associate issues.

Other example patent applications of interest include U.S. Patent Publication 2013/0191291 which describes a crowd-sourced project management system that supports methods for participants to start, join, communicate, and contribute "user-defined activities", and US Patent Publication 2011/0010214 which describes methods and systems for project management where a user can define "work packages" for a project and arrange the work packages into an execution sequence. Execution sequences may include one or more tasks. While the diagrams in these two patent publications include flowcharts, the flowcharts do not represent the underlying software code being developed.

Some examples of design patents for interactive user interfaces include:
USD 712918S1 is a design patent for a graphical user interface to a music application;
USD 737833S1 is a design patent for a smart phone shortcut menu; and
USD 726204S1 is a design patent on an operating system sidebar display.

### SUMMARY

### Problems with Prior Approaches

None of these existing tools provide an interactive graphical user interface to an issue tracking / project management system that can link tasks or issues to specific areas on a graphic representation of the project.

More particularly, it can be chaotic working on projects such as software development projects. Using tools such as JIRA alone can be challenging as they are text-heavy and there isn't an easy way for team members to relate tasks to particular functional aspects of the software itself. As a result, team members may also lose context-quickly-without a clear place to constantly refer to.

### Technical Overview

We have developed a graphical project management tool that takes representational images such as diagrams and designs originating from a number of graphics tools and/or online services (such as Invision, Sketch, Visio, Gliffy, or any image source) as input. The user then defines one or more "regions" of the image as a "hotspot". The user may then associate the hotspots with issues / tasks that are tracked by one or more project management solutions (such as Jira, Trello, or any similar tool that can be queried for information concerning tracked tasks) . The user can originate new tasks from within the tool, or may view a list of unassigned / unassociated issues / tasks imported from the project management tool. The project management toolalso ensures that data is kept in sync between the graphics tool and the management tool, in real time.

The graphical project management tool may also provide selected features of an interactive user interface. For example, a user can select a functional block or some other area of a diagram as a "hot spot" and then associate one or more issues to it. In another example, a user can highlight an issue in a list of open issues, and see the associated hotspot highlighted.

More particularly, a software tool we call "Gliffy Project" is primarily concerned with providing an interactive graphical representation of the status of a project, as opposed to managing the individual tasks themselves. An external task tracking tool (such as JIRA) is relied upon to provide access to an underlying database of tasks. That database of tasks typically does not have any information about a graphic or other diagram that is representative of the project. Similarly, a diagram imported into Gliffy Project initially "knows" nothing about the project tasks. The Gliffy Project tool is thus used to define regions of the diagram as hotspots and associate them with task data inherited from the task management system.

A user interface can thus now provide an interactive view of the representative graphic, the hotspots, and text descriptions of the inherited tasks associated with those hotspots. In one implementation, a user interface is provided wherein a first portion of a screen presents the representative project graphic, and a list of tasks associated with the hotspot portions of the diagram is simultaneously presently on another portion of the screen. The different areas or regions on the diagram may be indicated with highlighted rectangles (or other visual indicia) to further indicate the hotspots that are associated with particular issues or tasks or groups of issues or tasks.

Each hotspot may also have a visual tag such as a small colored rectangle to the upper left of the hotspot. The tag may include a number representing the number of open issues for that hotspot, or the tag may have other indicia such as how much time is left to meet a deadline, or some other relevant statistic. Data for the tag may thus also be inherited from the project management system, to for example, permit users to plan a discrete amount of work to be performed in a particular amount of time.

The graphical tool may be used as an interface to present task data that originates with multiple other project tools. For example, the project team may use a first task tracking tool such as JIRA to track some types of tasks, and another tool such as Trello or Project Place, more appropriate for tracking other types of tasks. These different task management tools, assuming they each provide access to their underlying task data such as through an API, can each be accessed by Gliffy Project. It is even now possible for a single representative image to inherit tasks from more than one project task tracking tool at the same time.

In some implememtations, filters may be specified so that only certain subset(s) of the tasks are shown adjacent the representative diagram. For example a query may be made that only returns the tasks that are associated with a particular user, or only those tasks due next week, or only the tasks associated with a particular set of hotspots, or some other task relation to the diagram. Filters can thus act as a different type of lens into the status of the project, still with the visually rendered project diagram displayed behind it, but to highlight only those tasks that have a certain attribute.

### BRIEF DESCRIPTION OF THE DRAWINGS

The foregoing and other objects, features and advantages will be apparent from the following more particular description of preferred embodiments, as illustrated in the accompanying drawings.
Figure 1 is an example user interface screen that may be generated by a graphical project management tool.
Figure 2 is an example sign in screen.
Figure 3 is an example prompt to access task data from an external project management tool.
Figure 4 is an example screen to select a project.
Figure 5 is an example screen to create a new project.
Figure 6 is an example screen where a user may invite other team members to access a new project.
Figure 7 is a drag-and-drop interface to associate images with a project.
Figure 8 is an example input screen using a explorer type interface to select image files to associate with a project.
Figure 9 is a display showing available projects represented by icons.
Figure 10 illustrates projects identified by representative graphical icons.
Figure 11 is a screen illustrating several drawings associated with a project.
Figure 12 is a screen illustrating the files associated with a project using icons.
Figure 13 is working screen illustrating a representative graphical image associated with a project and several hotspots that have been defined on the representative image.
Figure 14 illustrates how tasks (or issues) accessed from an external project management system may be associated with hotspots.
Figure 15 is an example user interface screen enabling a user attaches a new issue to a hotspot.
Figure 16 is a screen where the user is entering additional detailed information related to the new issue.
Figure 17 is an example of user interface screen presented when the user requests a list of open issues from an external project management tool.
Figure 18 illustrates a situation where user has associated the two issues at the top of the list with the selected hotspot.
Figure 19 more generally illustrates the user interface including a canvas area where the project graphic is placed and the overlaid hotspots.
Figure 20 is similar to Figure 19 but shows the list of tasks in more detail.
Figure 21 illustrates a use case where the project-related image did not originate from the drawing tool, and is instead a digital photograph of a hand drawn sketch on a whiteboard.
Figure 22 is a use case where the project image is a floor plan for building out an office space.
Figure 23 is another use case where the project image is of a project timeline.
Figure 24 illustrates a number of the data processing system elements that may be used to implement the graphical project management tool; it also shows a particular sequence of messages that may be exchanged between these data processors to provide a user interface such as that described for Figure 18 and other Figures.
Figure 25 is an example state flow diagram (that is, an automated process) where a user associates an image with a project.
Figure 26 is an example state flow diagram for deleting a project.
Figure 27 is a state flow diagram for when a user has asked to delete an image.
Figure 28 is a state flow diagram for when a user has asked to delete a hotspot associated with an image.
Figure 29 is a state flow diagram for when a user wishes to remove an association between an issue and hotspot.
Figure 30 is a state flow executed when the user wishes to replace an image with a new one.
Figure 31 is a state flow diagram for when a user wishes to attach an existing issue to a hotspot.
Figure 32 illustrates a state diagram when a user wishes to create a new issue that is not yet stored in the external project management system.
Figure 33 is a state flow for patching an existing issue.
Figure 34 is a state flow diagram representing what happens when a client requests information about a particular issue.
Figure 35 is a state flow diagram for when the user wishes to issue a search query directly to the external project management system.
Figure 36 is a state flow diagram illustrating how a user may modify the region of an image associated with a hotspot.

### DETAILED DESCRIPTION OF ONE OR MORE EMBODIMENTS

### Example User Interface

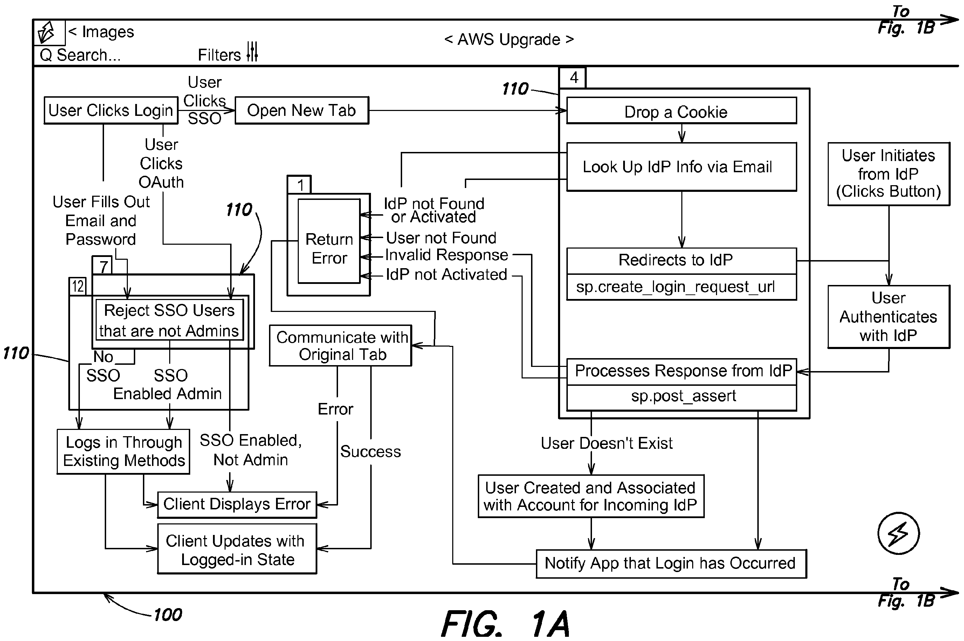

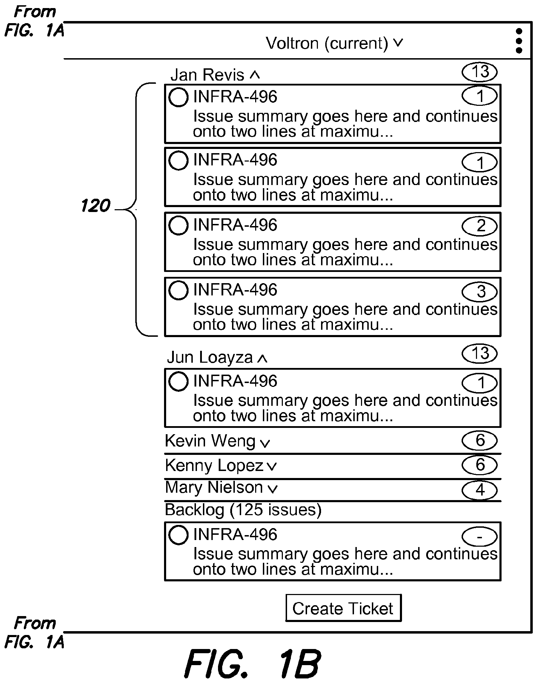

Figure 1 is an example of a user interface screen that may be generated by one example implementation of an interactive graphical project management tool we "Gliffy Project".

One example use for Gliffy Project is to help manage a team that is developing a sofrware application. The main section of the screen 100 (or "canvas') is devoted to presenting an interactive graphical representation of the functional flow of the blocks/components of the software application. Here, the software development team is working on an "Amazon Web Services (AWS™) Upgrade" project (AWS is a trademark of Amazon Technologies, Inc. of Seattle WA). In this example, the graphic depiction 102 is a functional flow diagram that originated from a diagramming tool, Gliffy™ (Gliffy is a trademark of Gliffy, Inc. of San Francisco, CA). It should be understood that the graphic 102 could have originated from other graphical tools such as Visio, Invision, Sketch, or Photoshop, or even a bitmap image. The graphic 102 may also be dynamic in that it changes over time. Such dynamic graphics may be generated by a computer aided design (CAD), engineering modeling, software prototyping system or service.

The tool permits a user to designate one or more functional blocks in the flow (or "regions of the image") and tag them as a "hotspot" 110. Here the four (4) hotspots have been identified by being surrounded by a shaded or colored or otherwise highlighted rectangle. The contents may also be shaded, colored or highlighted. The user can then associate "tasks" 120 with each hotspot 110.

The tasks 120 associated with the project may be listed to the right of the graphic 102. The tasks 120 may include tickets indicating some action to be taken, or issues to be resolved, or some other thing to be tracked that is inherited from and/or provided to a project management system or tool such as JIRA™ (JIRA is trademark for a project tracking software available from Atlassian of San Francisco, CA.) (We will sometimes use the word "task" and the word "issue" interchangeably herein to indicate the thing being tracked). It should be understood that JIRA is just one example of a task tracking tool and that many others may be used. In the case of a software project, the tasks tracked may include things requiring attention by the development team, such as fixing bugs, requested revisions, adding comments or other things.

The user can associate one or more new tasks 120 with each hotspot 110. The new tasks are then automatically synced to the associated project tracking system such as JIRA. The status of resolving tasks / issues 120 can also be reviewed / updated by interacting with the flow diagram. For example, users may apply a filter and choose to see only their "own" tasks/ issues in the list on the right hand side. In other modes, a user might see or comment on other team members' tasks/issues. These features will be better understood after review of the details that follow.

While Gliffy and Jira were the respective graphical tool and task management tool in the example of Figure 1, Gliffy Project can also tie into and synchronize diagrams provided from a number of tools and online services (Invision, Sketch, Visio, Gliffy, etc.) to issues tracked by one or multiple project task management solutions (JIRA, or Trello .etc.). The data from both sides (e.g., the data from both the graphical tool and the project management tool) is kept in sync, in real time. This may be accomplished by having Gliffy Project create and maintain relations between the hotspots 110 defined on the diagrams and related tasks 120 tracked by the project management system, such as in a database. In this approach, any modifications to the tasksmade by the user within the Gliffy Project framework should be propogated back to the task tracking tool.

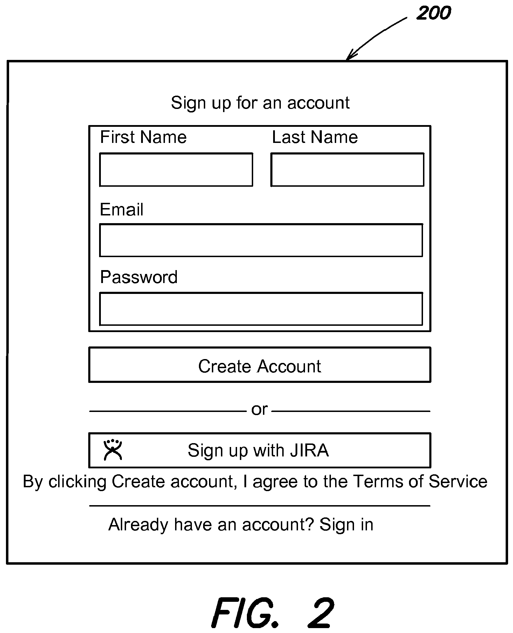

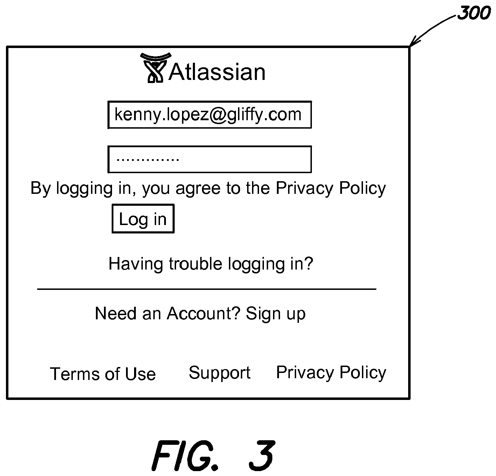

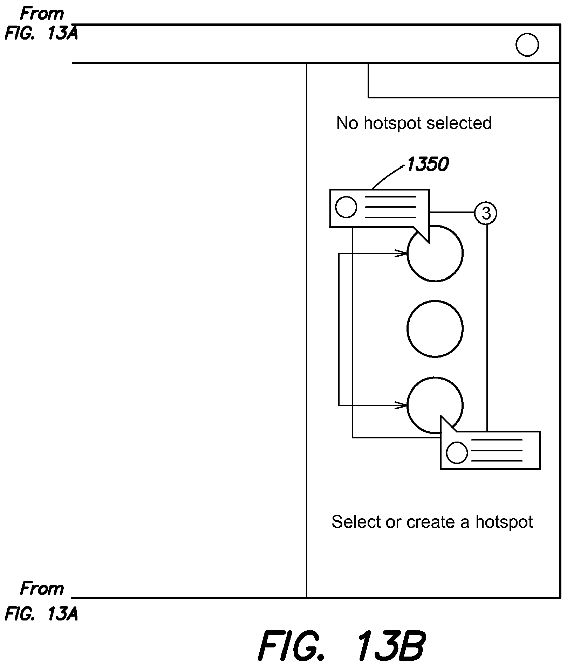

Turning now to a more detailed discussion of an example implementation, when the user initially starts the Gliffy Project application they may be prompted via a user interface to sign in or create an account via a screen 200 such as that shown in Figure 2. Next, in the user interface screen 300 of Figure 3, the user may also be prompted to provide their credentials to access project tasks data that may be accessible to her in an external project task tracking tool. Here the task tracking tool is provided by a vendor such as Atlassian who offers an Application Programming Interface (API) to login to their JIRA issue tracking system and access the data it contains.

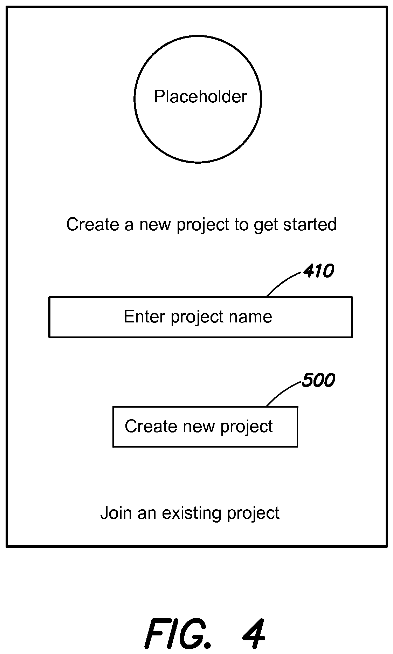

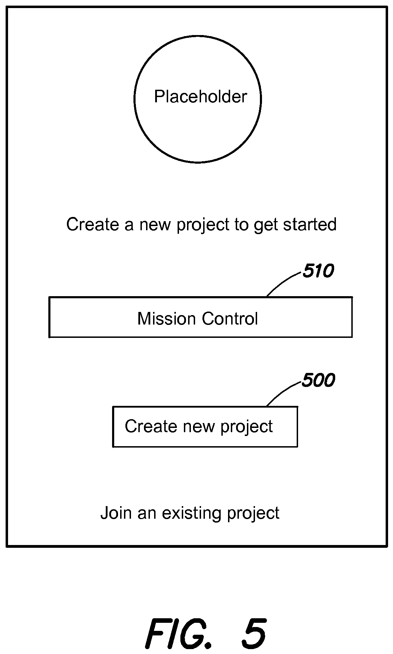

As next shown in Figures 4 and 5 the user may ask to open an existing project, such as at 400 and 410, or create a new project, such as at 500 or 510.

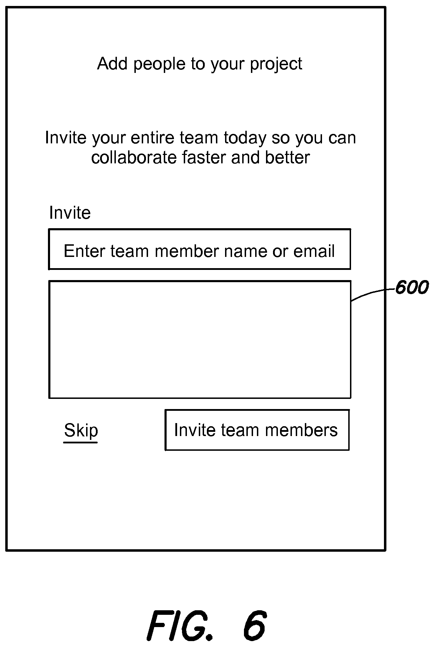

As shown in Figure 6, where the user has chosen to create a new project, they may be prompted at 600 to invite team members to be given access to the new project.

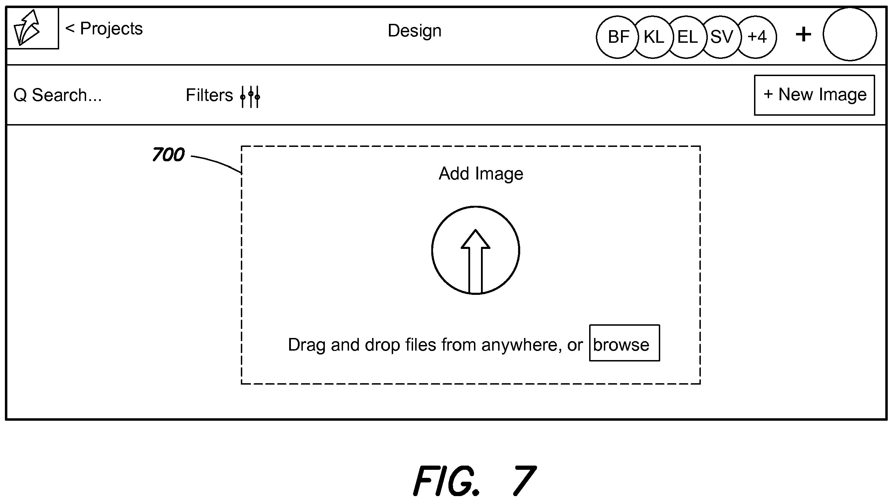

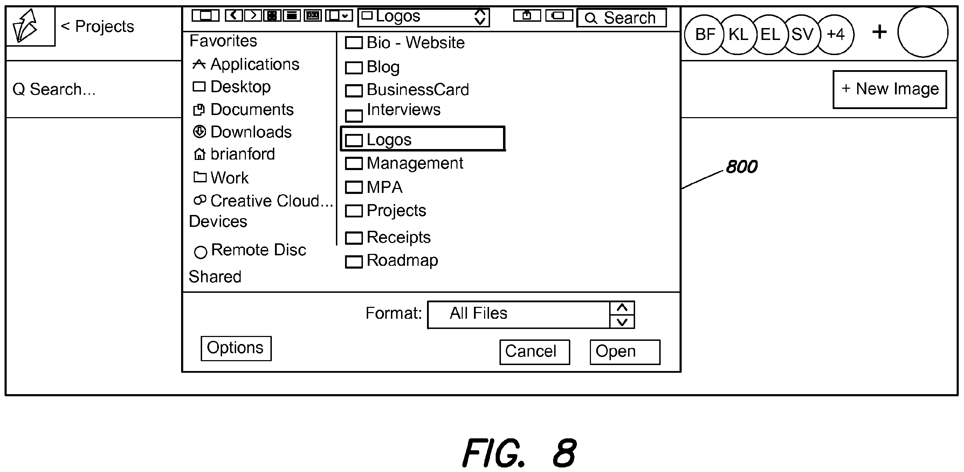

The user may then be given several options in which to associate images with the project. In the screen of Figure 7, a drag-and-drop type interface 700 enables the user to associate existing images as being representative of the new project; in Figure 8 the user is instead prompted with a Windows Explorer or Mac OSX Finder type interface 800 enabling them to navigate through a set of file folders to select one or more image file(s).

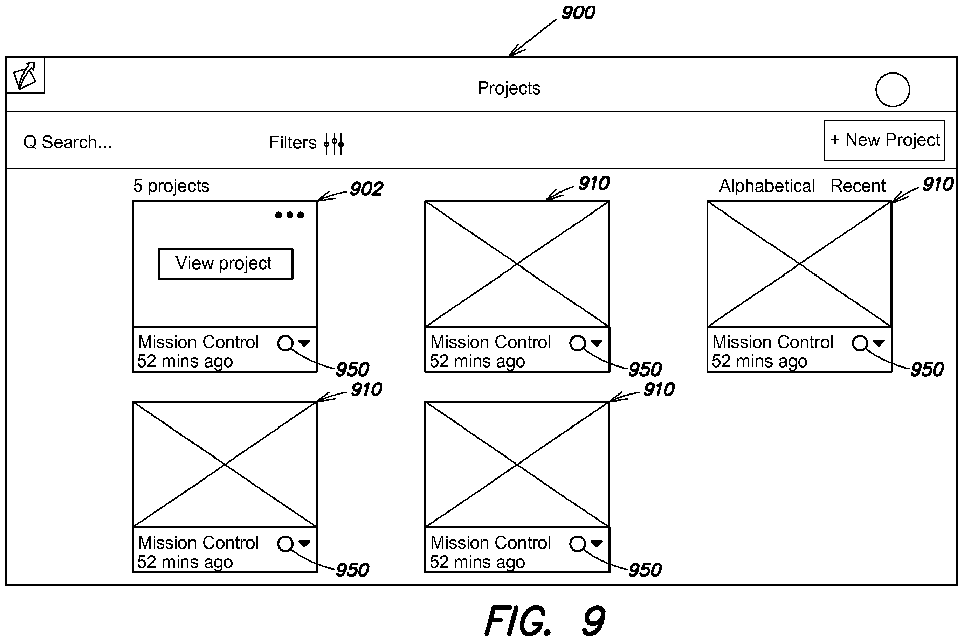

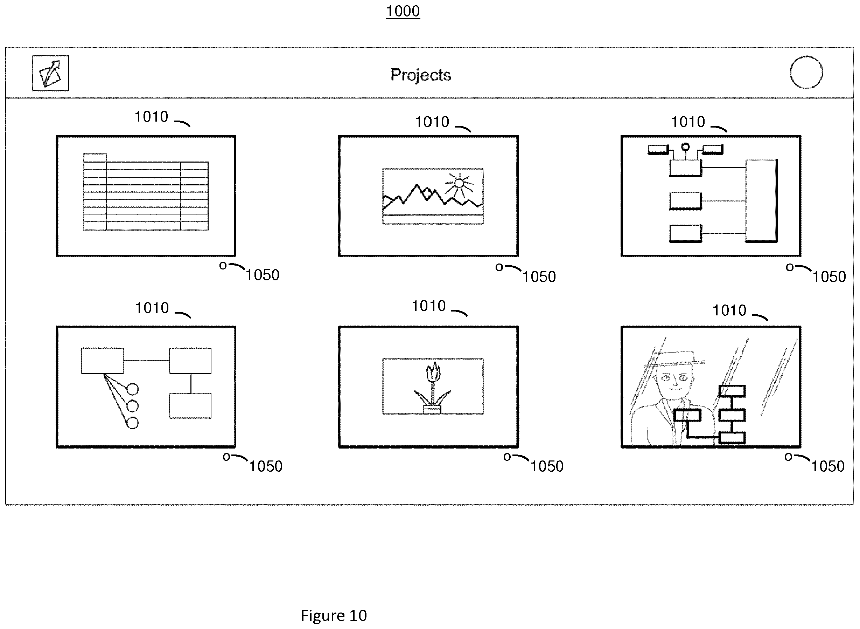

Eventually the user is presented with a display screen such as that shown in Figure 9 or Figure 10 where they are shown a list of projects. As per Figure 9, this may be a display 900 of folder-icons 910, one folder icon 910 for each project, with a selected project 902 highlighted. Or, as per Figure 10, the screen 1000 may indicate each project 1010 with a representative graphical icon. A project status indicator 950 may also be provided with each project icon. In Figure 9, the status indicator is a colored dot below each project icon. The color of the dot indicates the project status, such as with a green color dot indicating a project that is on target, and yellow or red dots indicating projects requiring additional work or urgent attention. Similar status indicators 1050 may be provide with the screen of Figure 10.

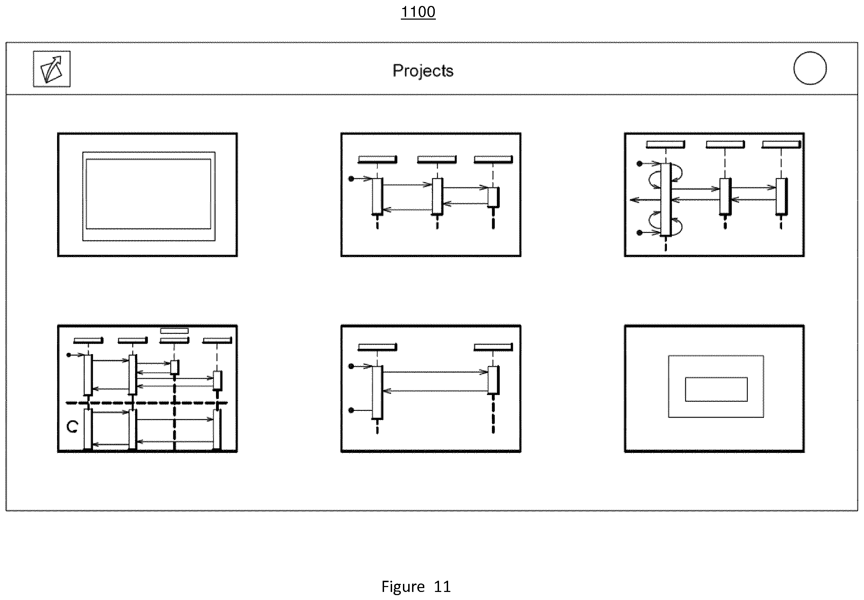

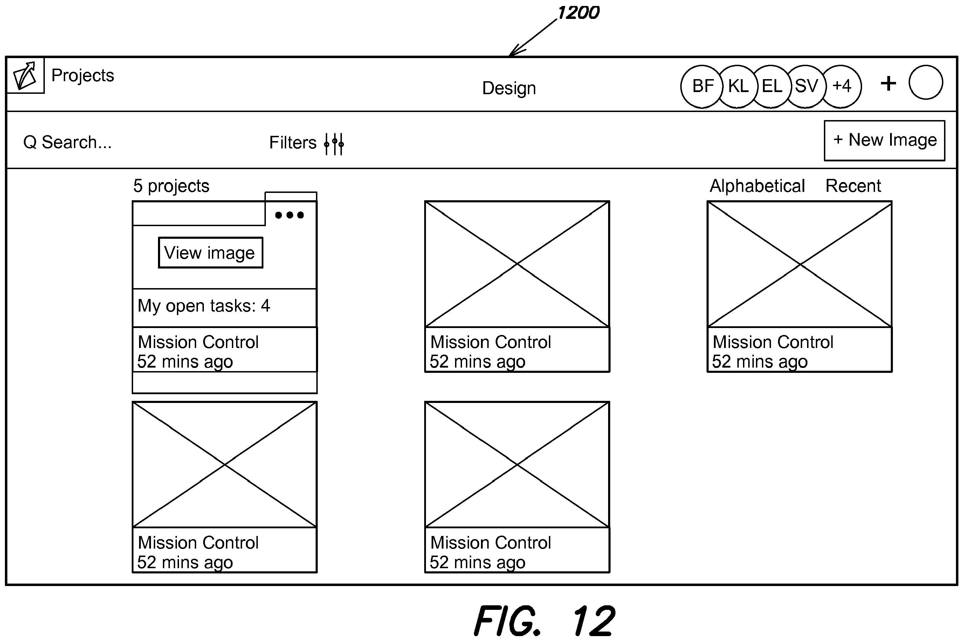

After selecting a project (such as by clicking on its associated icon in the screens of Figure 9 or Figure 10), the user is presented with a screen such as Figure 11 or Figure 12. Displayed here is a set or list of the drawings that are associated with the project. The drawings may be listed as a graphical presentation 1100 as in Figure 11, or as icons 1200 in the example of Figure 12. Either of these may be organized in some way such as a flat list or as a hierarchy.

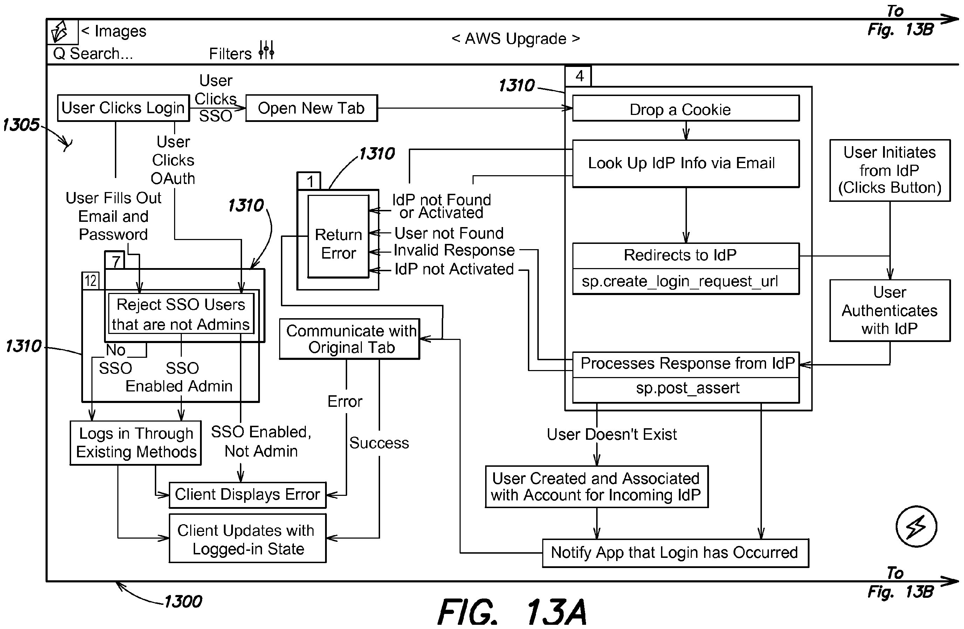

After selecting one of the images to work on, the user is brought to a screen 1300 such as that shown in Figure 13. In this particular example, the image includes a state flow diagram 1305 for the AWS upgrade project already mentioned above in connection with Figure 1.

The basic idea here is that the user is now free to define areas or regions in the image 1305 that we call "hotspots" 1310 and then associate tasks 1320 with each hotspot 1310.

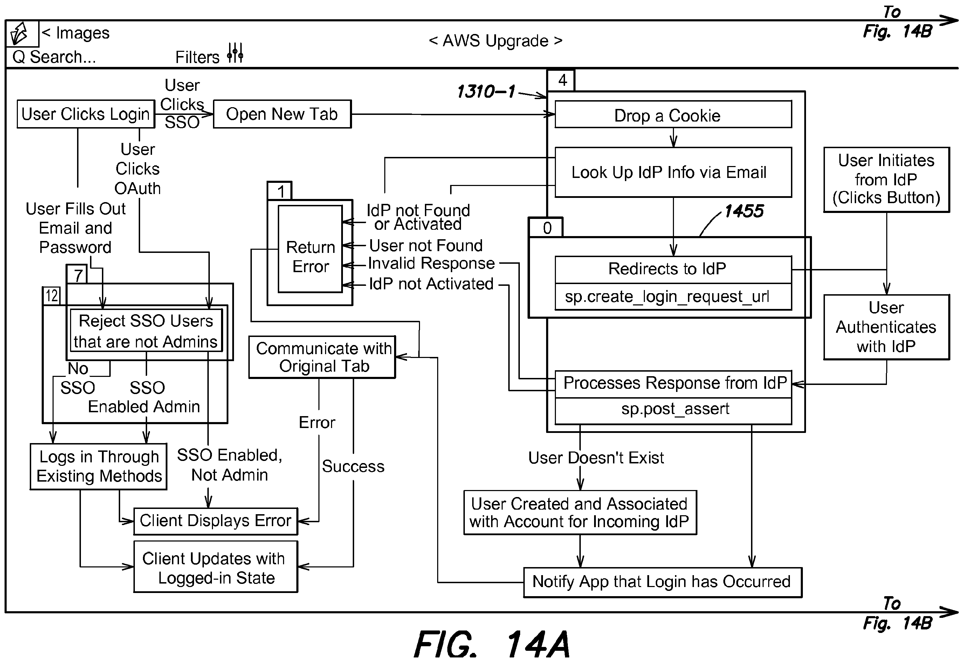

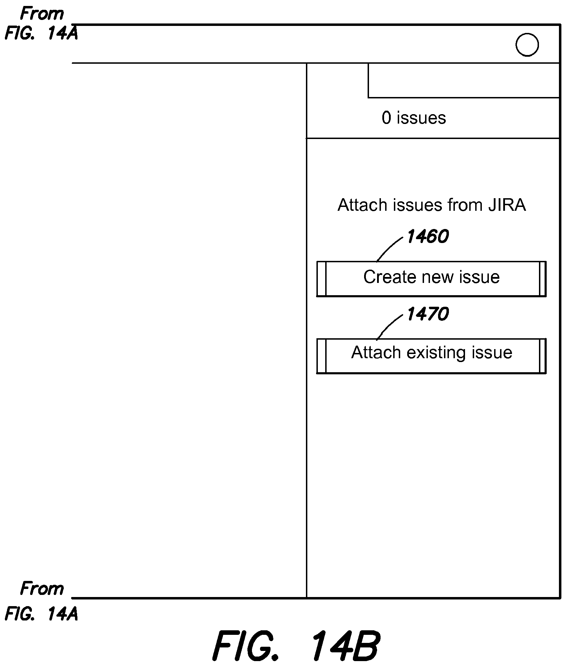

So, as shown in Figure 13 and 14, the user may use a drawing toolbox on the right hand side of the canvas to define a region that will be a new hotspot. The drawing tools 1350 available in this example permit the user to define the new hotspot 1310 as a rectangle or circle encompassing some portion or sub-region of the image 1305. Here, as shown best in Figure 14, the user has drawn a rectangle 1455 around the functional blocks labelled "Redirects to IP" and "sp_create_login_request_url" and desires to create a new hotspot for them (even though these same funcation blocks were already associated with an existing hotspot 1310-1). The user's input, which may originate from a mouse or touch pade, may be provided as an X, Y location of the hotspot rectangle and height and width of the rectangle so defined.

Next, the user may select a button 1460 to create a new task (issue) for the new hotspot, or select another button 1470 to associate tasks that are imported from JIRA (or other external task tracking tool).

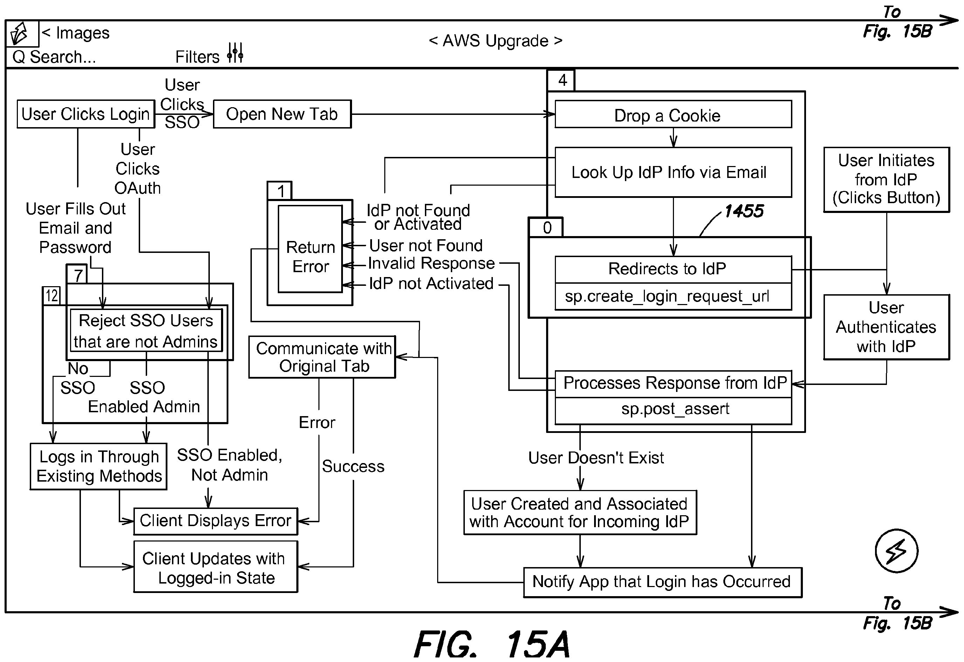

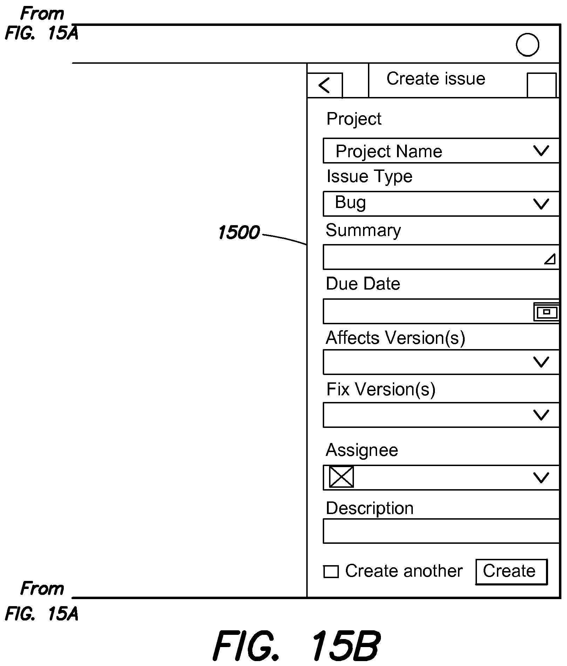

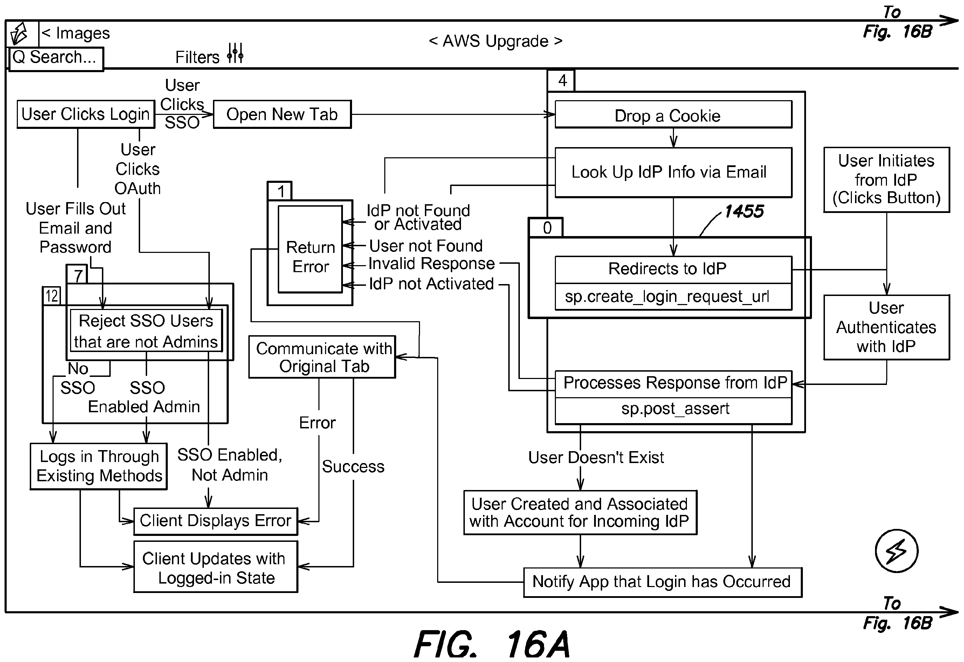

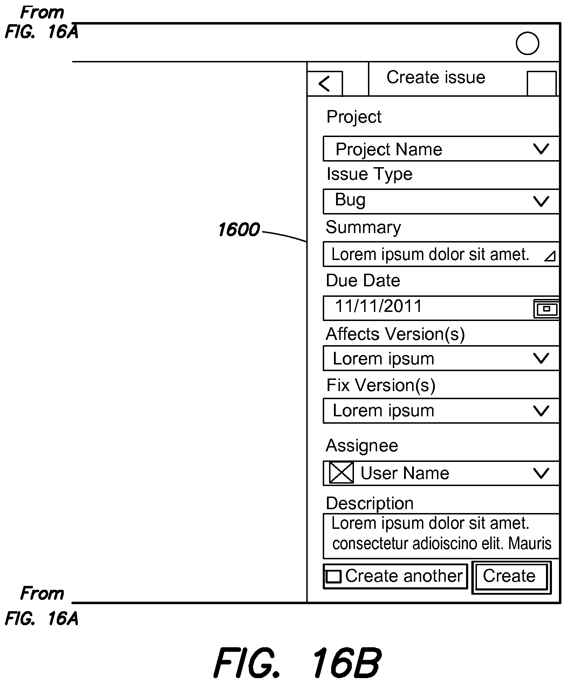

Figures 15 and 16 illustrate an example where the user has chosen to attach a new issue to the new hotspot 1455 and is inputing text via the user interface screens at 1500 and 1600 that describes the details of the new issue to be associated with the new hotspot 1455. The text will be associated with the hotspot definition in a database, and in some instances, also propogated back to the task tracking system, as explained in more detail below.

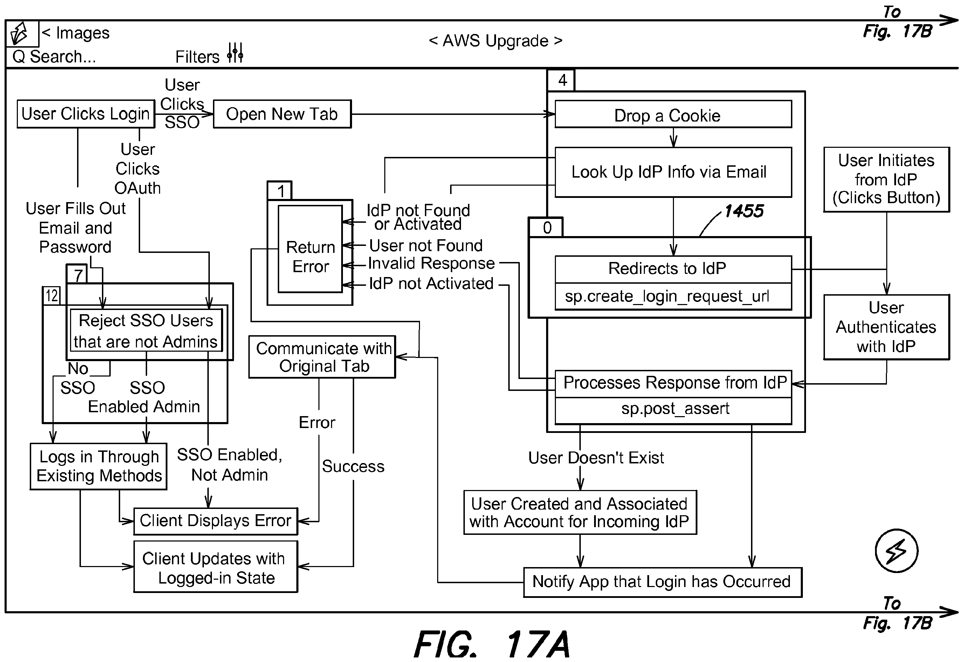

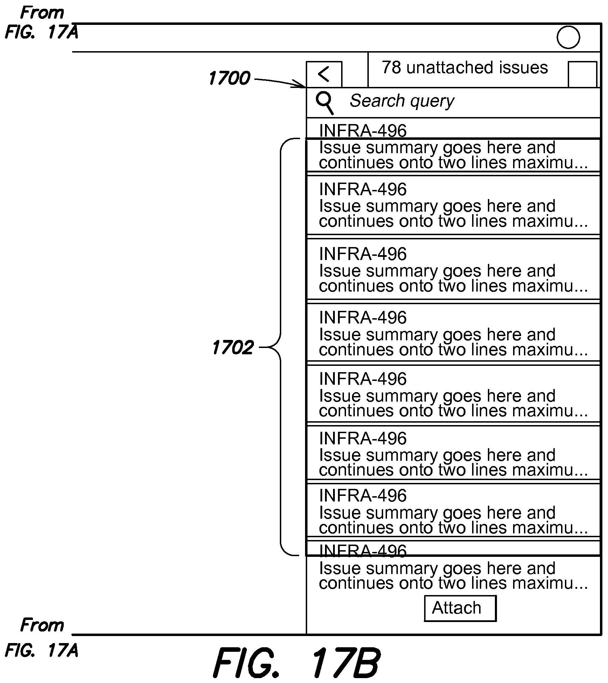

Figure 17 is an example where the user has chosen instead to request a list 1700 of open issues from JIRA. Gliffy Project accesses a task tracking or other project management tool such as JIRA (such as through an API) to access the list of open tasks / issues. The user can then choose to associate one or more of the tasks / issues 1702 propagated from the external task tracking tool to the new hotspot 1455.

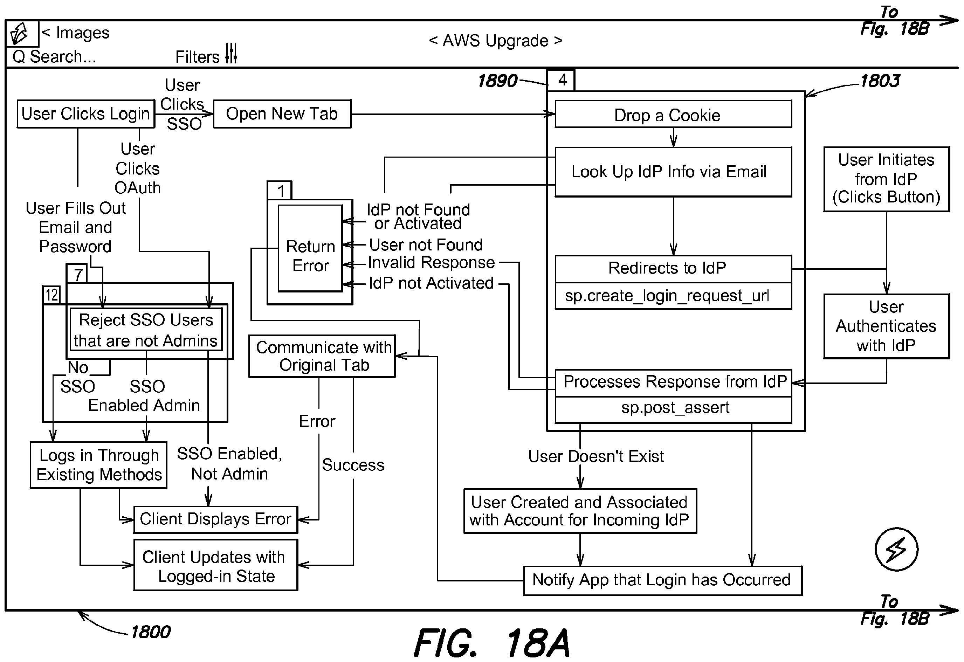

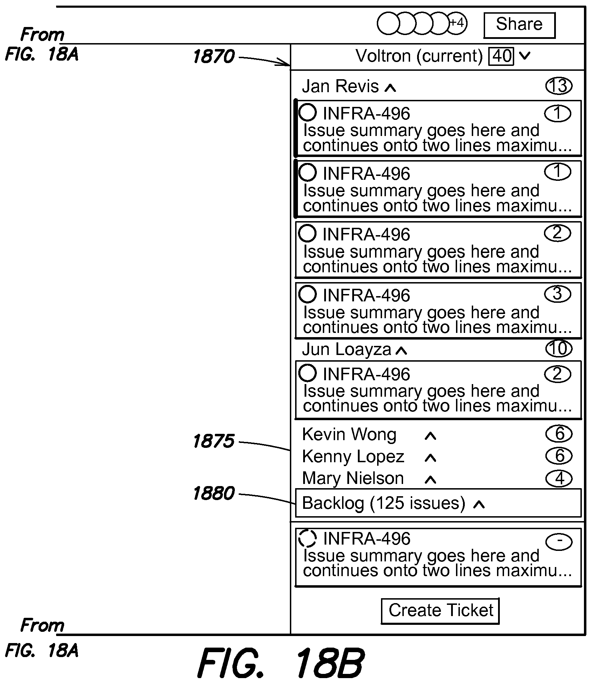

Gliffy Project also makes it possible for the user to easily see which issues are associated with which hotspot, and which hotspot is associated with an issue. This is shown in Figure 18, where the user has selected the two issues 1801, 1082 at the top of the list (shown with highlighted bars to the left of the issue description) to be associated with the hotspot 1803 she has selected (the hotspot with the first block labelled "Drop a cookie"). Similarly, the user may select an issue 1801 in the list on the right, and the associated hotspot(s) 1803 will be highlighted on the canvas 1800.

Although not shown in the drawings here, Gliffy Project may also permit the user to overlay and/or associate other documents and/or information onto the graphic and/or the region associated with a selected hotspot. Such other information may be a text document with further details about the issue, an email, a chat thread, or other information.

Figure 18 also shows that the current user, Jan Revis, may limit her view to her own issues. However Jan can also select from the dropdown list 1875 in the lower right hand corner and view issues for other team members (Kevin Weng, Kenny Lopez, Mary Nielson, etc.) as well as from a backlog list for the entire team (here there are a total of 125 open issues).

It should also be understood that filters may be specified so that only certain subset(s) of tasks shown in the list on the right-hand side. For example a query may be made to JIRA that only returns the tasks that are associated with a particular team member, or those due next week, or only the tasks associated with a particular set of hotspots, or some other relation between the tasks and the diagram. Filters can thus act as a different type of lens into the status of the project, still with the visual displayed behind it, but to highlight only the tasks that have a certain attribute.

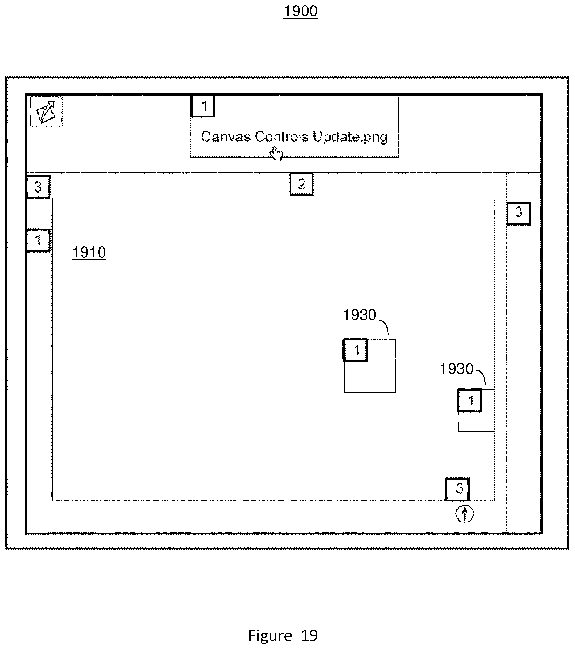

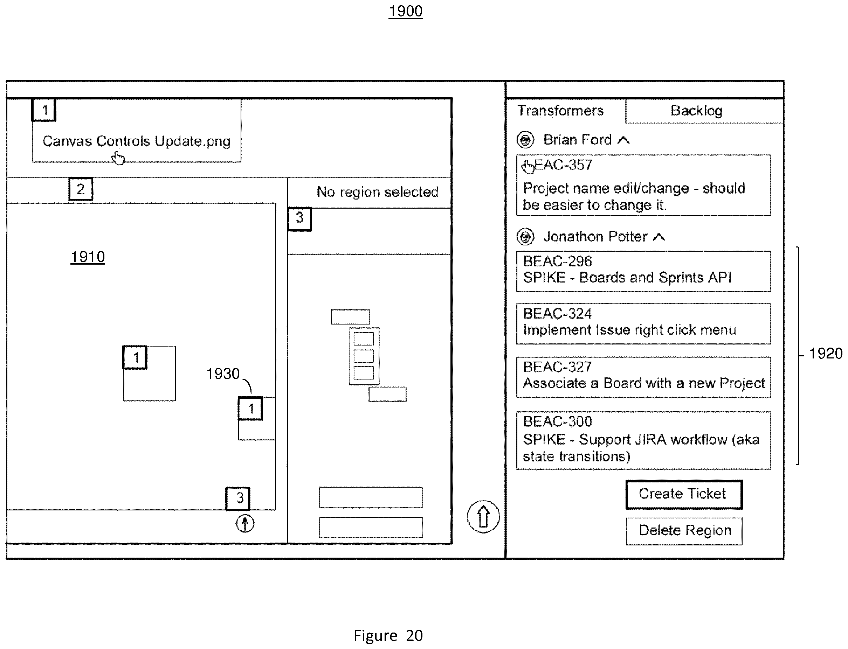

More generally, as represented by Figures 19 and 20, it should now be understood that Gliffy Project presents a user interface where the left-hand side of the screen (or the majority of the screen) is used as a canvas to present a graphic 1910 or other diagram that is representative of some aspect of a project. A list 1920 of tasks associated with portions of the diagram 1910 is simultaneously presently on the right-hand side of the canvas. The different areas or regions 1930 on the diagram indicated with highlighted rectangles (or other visual indicia) are hotspots 1940 to which are associated issues or tasks.

As was shown in Figure 18, each hotspot 1803 may also have a visual tag 1890 associated with it; in this particular example the tag 1890 is a small colored rectangle to the upper left of the hotspot 1803. The tag may include a number representing the number of open issues for that hotspot. In this example, another hotspot 1805 has twelve (12) open tasks as indicate by the tag 1895). The tags may have other purposes, such as to indicate how much time is left to meet a deadline, or some other relevant statistic. For example, the numbers in the tags may represent a cost story point or a level of effort required to address the issues in the hotspot. Data for the tag may thus also be inherited from the project management system, to for example, permit users to plan a discrete amount of work to be performed in a particular amount of time. Again, the main value-add by our approach is to associate information inherited from a project task tracking tool with some region or regions of a visual or set of visuals representative of a project.

The tasks displayed on the right hand side of the canvas may originate from user input into Gliffy Project, or more typically may be inherited from an associated task management or project tracking system such as JIRA. In other words, the tasks display on the right hand side of the canvas inherits its data and /or configuration from the project tracking tool.

Gliffy Project itself, in the typical embodiment, is not concerned with managing the tasks; rather that remains the principal responsibility of the project management tool. The project management tool is relied upon to provide access to an underlying database of tasks to Gliffy Project. That database of tasks typically does not have any information about the diagram. Similarly, a diagram imported into Gliffy Project initially "knows" nothing about the underlying tasks. It is the Gliffy Project tool which associates regions of the diagram as hotspots with associated task data provided from the database of tasks. In other words, the Gliffy Project tool enables a user (such as a software or hardware engineer, a manager, or some other worker) to tag parts of a diagram as hotspots and associate tasks with them.

It should be understood that more than one source of task data can be connected in Gliffy Project. For example, an organization may use JIRA to track some types of tasks or issues, and another tool such as Trello or Project Place to track other types of tasks. These different task management tools, assuming they each provide access to their underlying task data such as through an API, can each be accessed by Gliffy Project. Thus a single image may inherit tasks from more than one project management tool at the same time. In other words, Gliffy Project can be used to roll up different sources of task data into a single canvas.

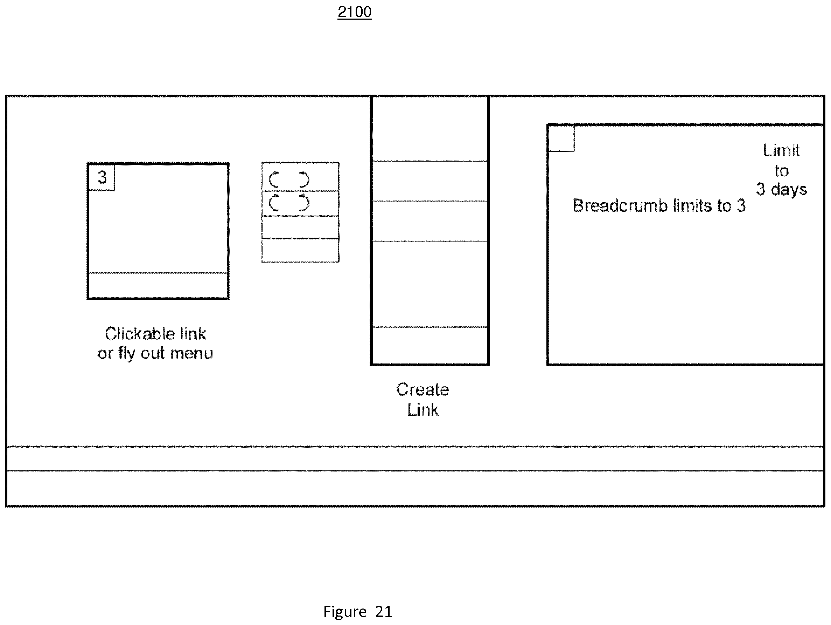

Figure 21 is another use case where the image associated with the software development project did not originate from a drawing tool such as Gliffy, but rather was just a digital photograph of a white board sketch made during a meeting of the project team. Thus it should be understood that this type of bitmap image can also be imported into Gliffy Project, have hotspots defined as regions within it, and still have tasks asscoiated with the hotspots, just as in the examples decribed above which used computer-based tools to generate the diagram(s).

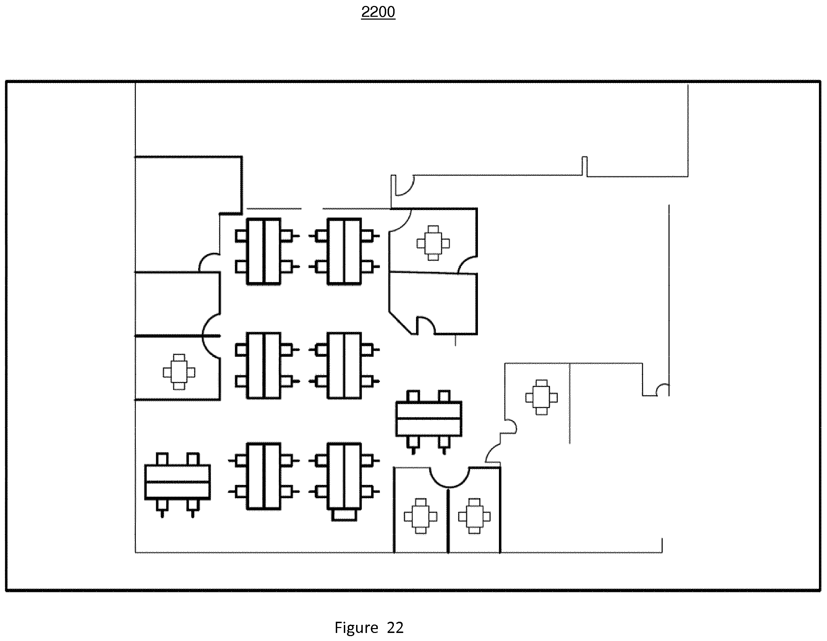

Gliffy Project can also be used be used for other situations. In the example of Figure 22, the image 2200 may represent a floor plan for the buildout of the floor of an office building. Hotspots can also be defined for this image and associated with tasks. For example, the portion of the image representing the set of desks at the top of the image may be grouped together as a hotspot 2201. The associated tasks are for a purchasing manager to buy the desks and for a contractor to assemble and install the desks. While a task list is not shown in Figure 22, their association to hotspots is handled similar to the prior examples. Another hotspot 2202 on the bottom of the graphic may be a rectangle surrounding one of the doors, and the task for a carpenter to move the door. So in this context, the floor plan is a visual that gives context to a list of many tasks that must be performed to finish building out the office space. Analogous to the earlier examples where tasks were assigned to particular software engineers, construction tasks may be assigned to contractors, carpenters, electricians, painters, purchasing managers and anyone else on the team responsible for completing the build-out. Thus, in a more general sense, any project that has an associated visual and a list of tasks are appropriate vehicle for Gliffy Project.

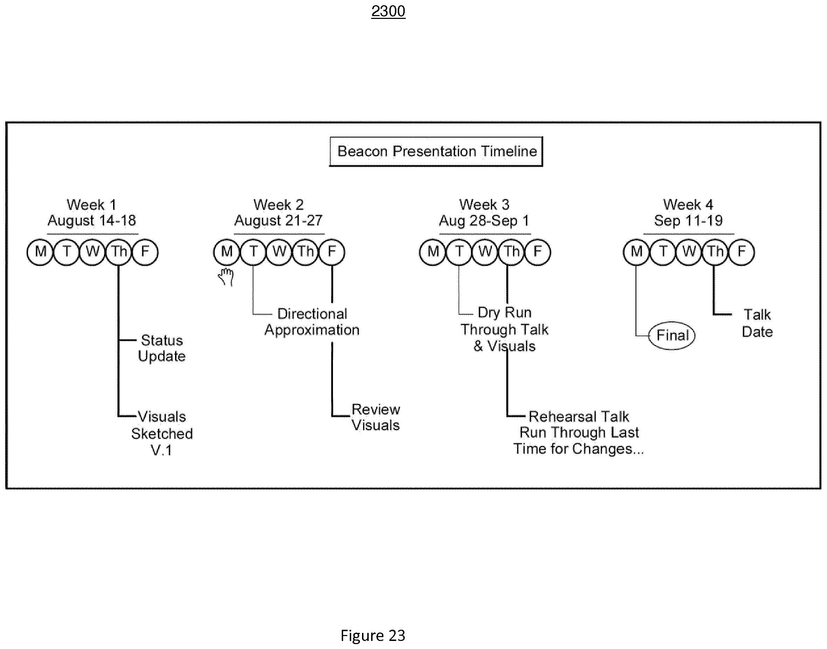

Figure 23 is another use case where the image is a photograph of a project time line. As with the prior example, the team was in a meeting that spontaneously made a plan, drawing boxes and lines between the boxes. This image can be imported into Gliffy Project, and have hotspots associated with it, and tasks created for each hotspot. Dates, person(s) responsible and level(s) of effort can also be input to the associated project management tool and applied to hotspots for images imported this way.

### Gliffy Project State Diagrams

This next section reviews a number of state diagrams that describe one example implementation of the Gliffy Project graphical project management tool.

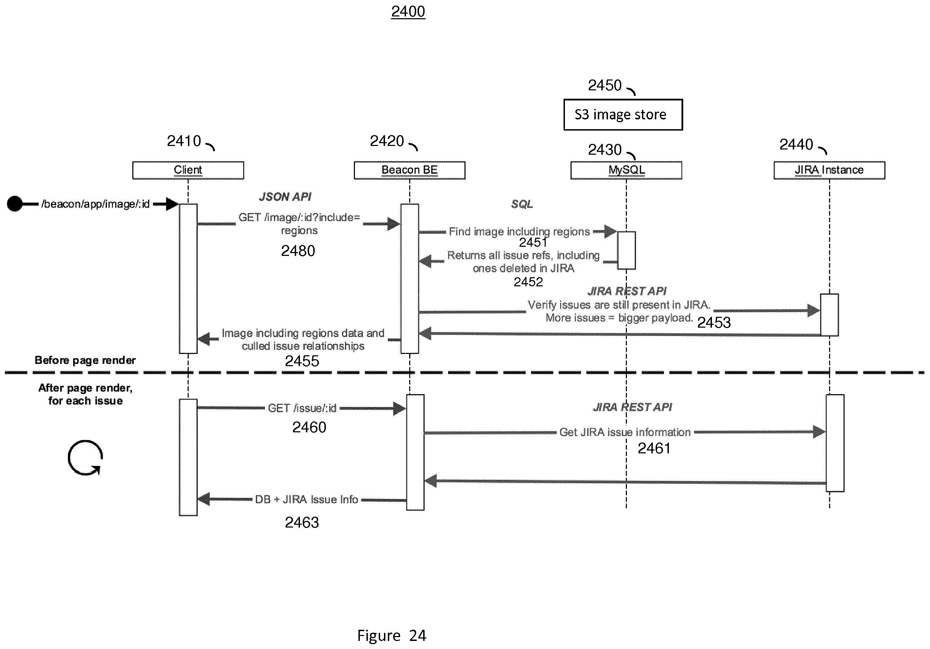

As shown in Figure 24, a number of data processing elements 2400 may implement the Gliffy Project graphical project management tool. These elements 2400 may consist of an interface 2410 to a client machine, a Gliffy Project server 2420 (Beacon BE), a relational database 2430 such as a MySQL database, and a task tracking tool 2440 such as JIRA that provides an Application Programming Interface (API) to one or more project management instances. An image store 2450, such an Amazon S3 cloud storage instance, may also be accessible to the database, the Gliffy Project server, or both.

Figure 24 shows a sequence of messages exchanged between the system components to provide user interface functions such as that described in the example of Figure 18. It should be understood that the graphical image has already been provided and stored in the image store 2450, hotspot "regions" have already been defined and stored in the MySQL database 2430, and tasks for those hotspots have already been retrieved from the JIRA instance 2440 and also associated with those regions in the MySQL database 2430.

The API call "GET image..." 2450 thus causes the Gliffy Project server 2420 to query the MySQL database 2430 to find the image including its regions. The database 2430 then not only fetches the image data itself from the image store 2450 but also returns 2452 the hotspot region definitions, and any tasks (issues) related to the image including the associated ones detected in the JIRA instance 2440. In a next state the Gliffy Project database may issue a Rest API call 2453 into the JIRA instance to verify that the issues retreived from its internal database are still present in JIRA (thus to provide the real time syncing between the Gliffy Project issues list and whatever JIRA is managing). At this point 2455 the image, including the overlaid hotspot data and issue relationships can then be generated by the server 2420 and passed to the client 2410 for display as in the example of Figure 18.

In another flow, once the page has been rendered to the user, the user may for example request information about a particular issue. This GET request 2460 from the client to the Gliffy Project server (which may be a JSON API call) causes the Gliffy Project server to query 2461 the JIRA REST API for further issue information. Upon retrieval 2462 of that issue information, information from both from the JIRA instance (list of associated issues) and the information internal to Gliffy Project (the height, width, and x, y coordinates of the hotspot regions) may then be passed 2463 so that the client may update the display on the client machine.

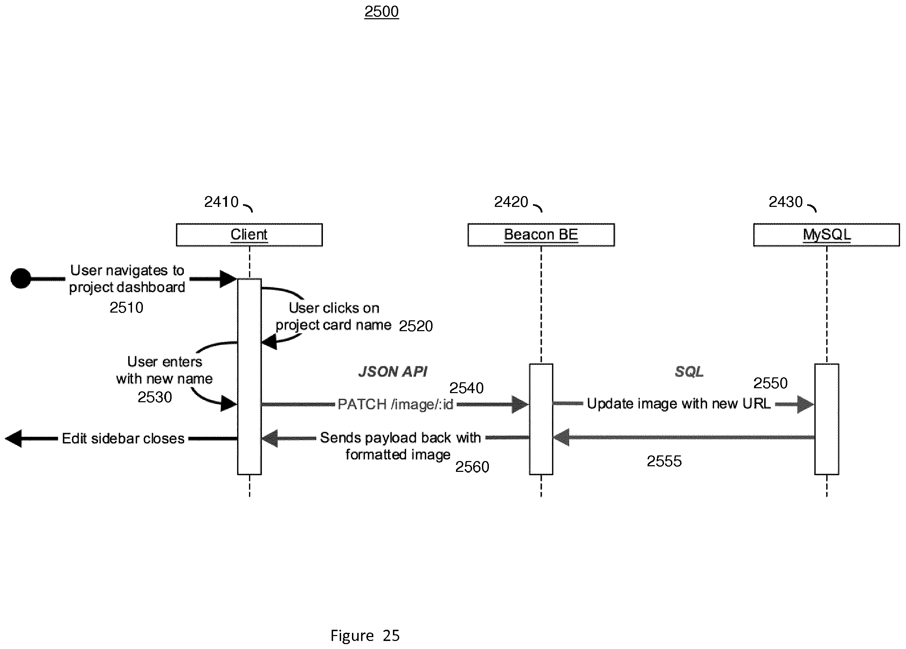

Figure 25 is an example state diagram 2500 for when a user wishes to associate an image with a project. When a user navigates 2510 to the project dashboard (e.g., see Figure 9) and the user clicks 2520 on a project card name, the user may then be prompted 2530 to enter a new name for the image. The client 2410 then issues a PATCH command to cause the Gliffy Project server 2420 to patch the images by updating 2550 the SQL database 2430 with the new URL 2550 for the image. The payload may then be returned 2555, 2560 back to the client with the formatted image.

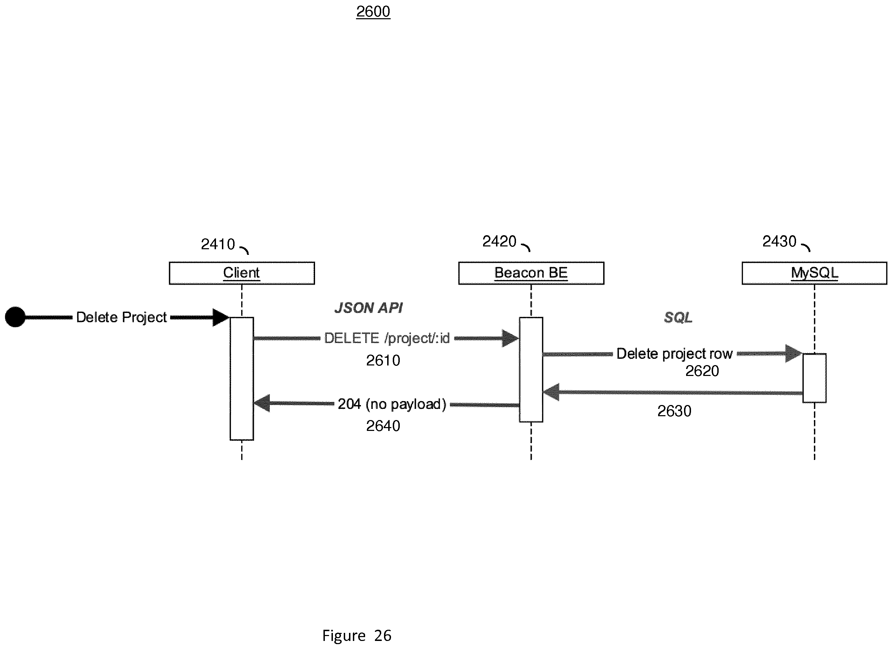

Figure 26 is an example state flow 2600 for deleting a project. Once a DELETE command 2610 is received from the client to delete a project, the command is propagated 2620 from the Gliffy Project server to the SQL database to delete the associated project row in the database. The deletion request is then acknowledged back to the server 2630 and then 2640 to the client.

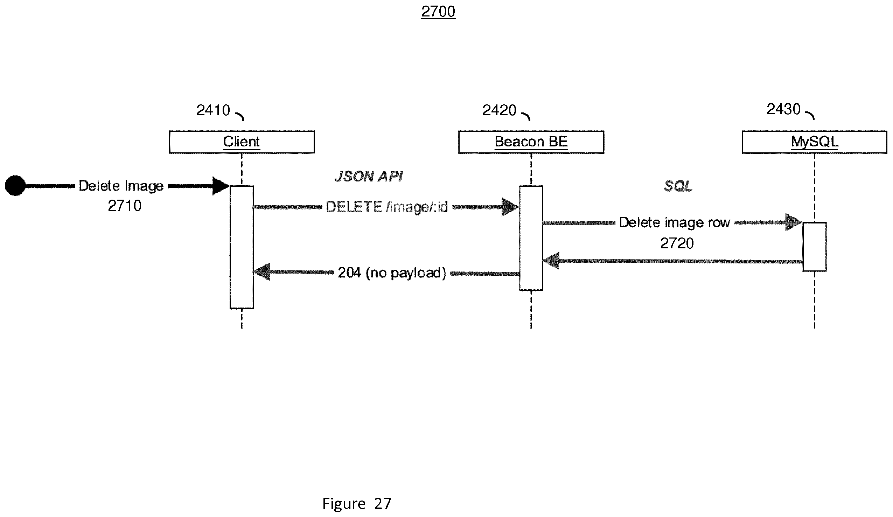

Figure 27 is a similar flow 2700 for when the user has requested 2710 deletion of image.

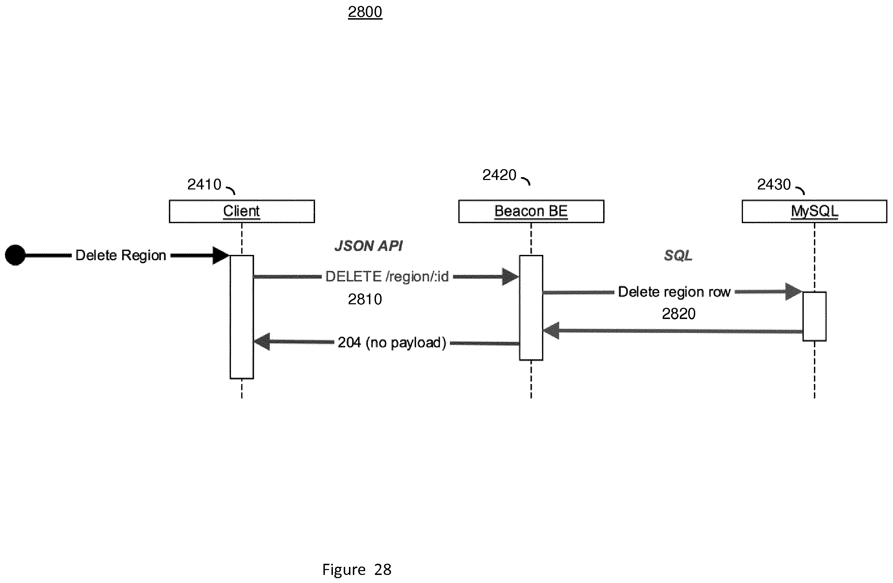

Simiarly, as shown in Figure 28 the user may initiate a flow 2800 to request deletion 2810 not of the whole image but just a region ("hotspot") associated with the image.

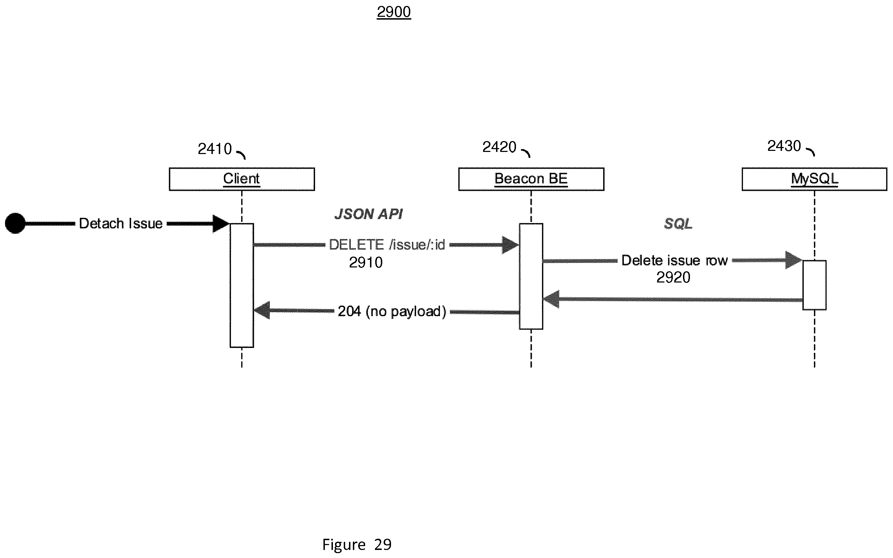

Existing issues associated with a hotspot can be deleted 2910 per the state diagram 2900 in Figure 29.

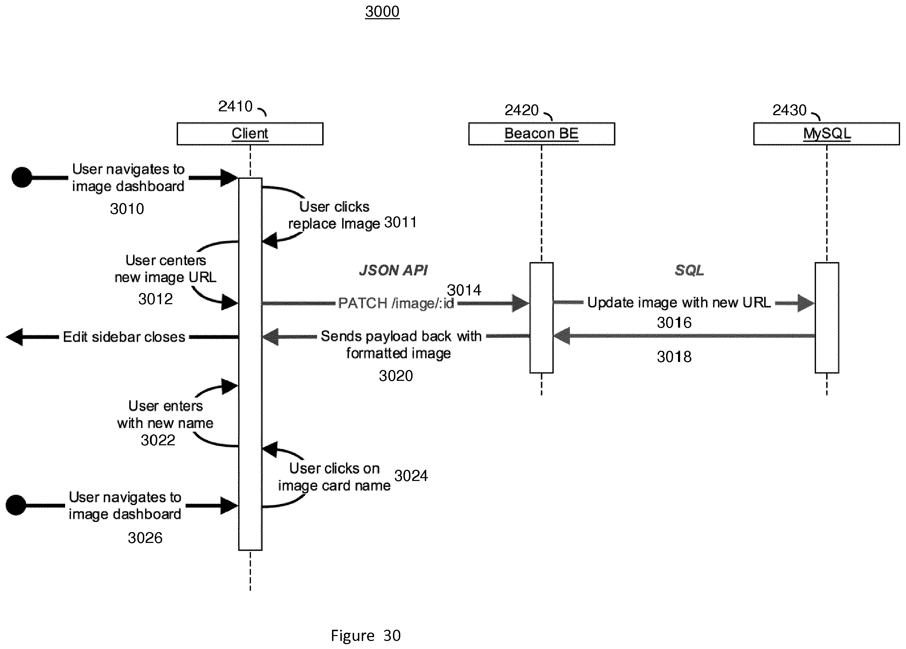

Figure 30 is a state flow 3000 that may be executed when the user wishes to replace an image with a new one. The client software navigates 3010 the user to an image dashboard and the user clicks on an option to select 3011 and place 3012 a new image URL. A PATCH command 3014 issued to the Gliffy Project server then causes the Gliffy Project server to send 3016 an Ipdate image command to the SQL database with the new URL. The update is then acknowledged back 3018, 3020 to the client. The user may also associate 3022 a new name as well.

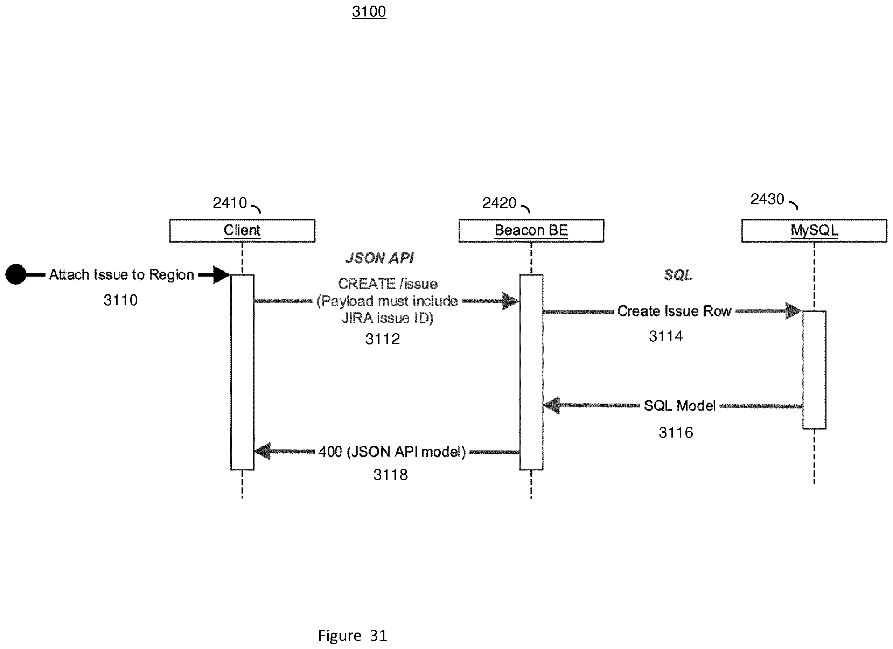

Figure 31 is a diagram for a flow 3100 that may be executed when a user wishes 3110 to attach an existing JIRA issue to a region (hotspot) in the diagram. The client issues 3112 a CREATE issue command that includes a JIRA issue identifier. This causes the Gliffy Project server to request 3114 the SQL database to create a new row for the issue; the new row stores the associated hotspot region with the issue ID in the SQL database. This database then responds with a SQL model 3116 and returns it 3118 so that the client can update the issue list display as needed.

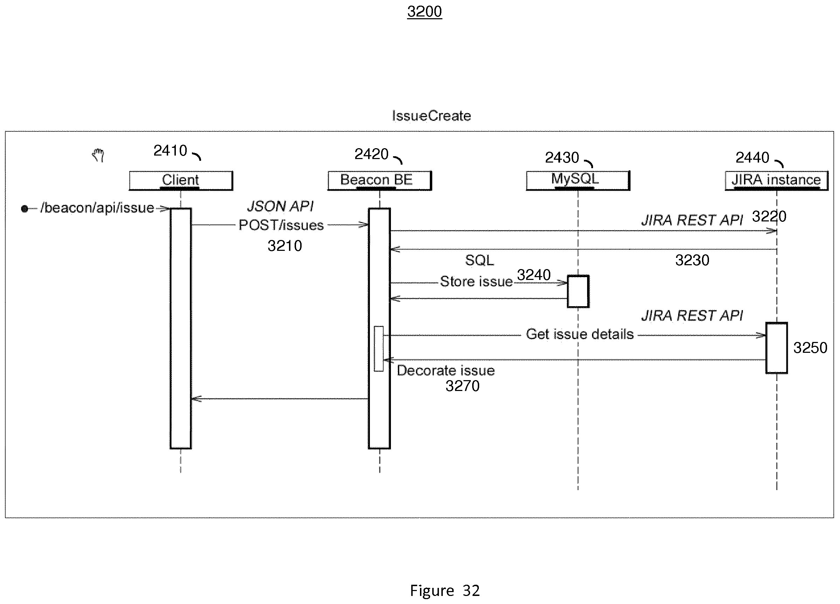

When a user wishes to create a new issue (an issue that is not yet in the JIRA instance), the state diagram 3200 of Figure 32 may be executed. Here the client issues a POST command 3210 to the Gliffy Project server which interacts with the JIRA API to create 3220 a new issue. An acknowledgment 3230 from JIRA includes an identifier for the new issue. The Gliffy Project server then requests 3240 the SQL database to store the issue identifier with the hotspot region identifier. At this point any further issue details may be obtained 3250 and stored in the JIRA instance, to further decorate the issue description.

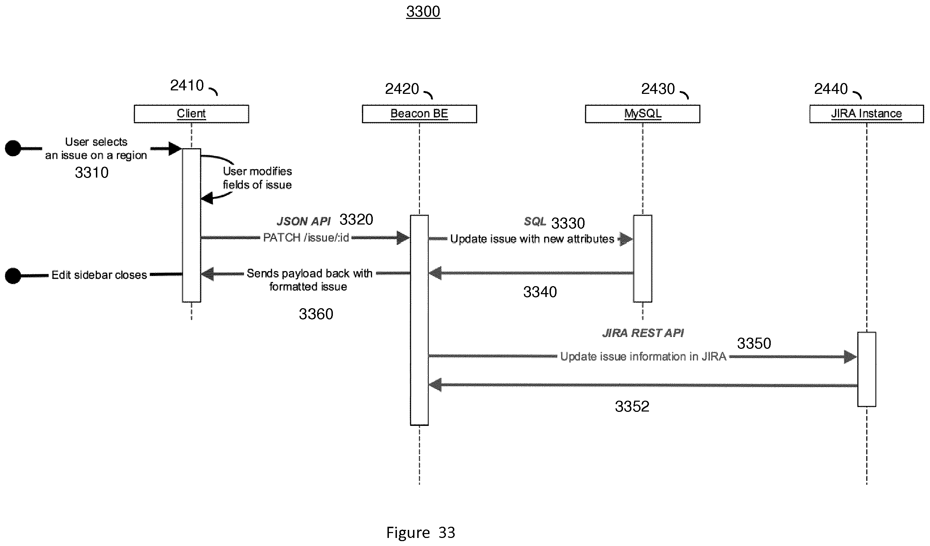

Figure 33 is a state flow 3300 for patching an existing issue. When the client indicates 3310 that the user wishes to modify the fields describing an issue, a PATCH issue command 3320 is sent to the Gliffy Project server. The Gliffy Project server then updates 3330 this issue with its new attributes in the local MySQL database. This new issue payload is then reported 3340, 3342 back to the client. A call 3350 is also made from the Gliffy Project server through the JIRA API so that JIRA can also update the issue information in its own database. In this way, the Gliffy Project internal database remains in sync with the external JIRA issue tracking system.

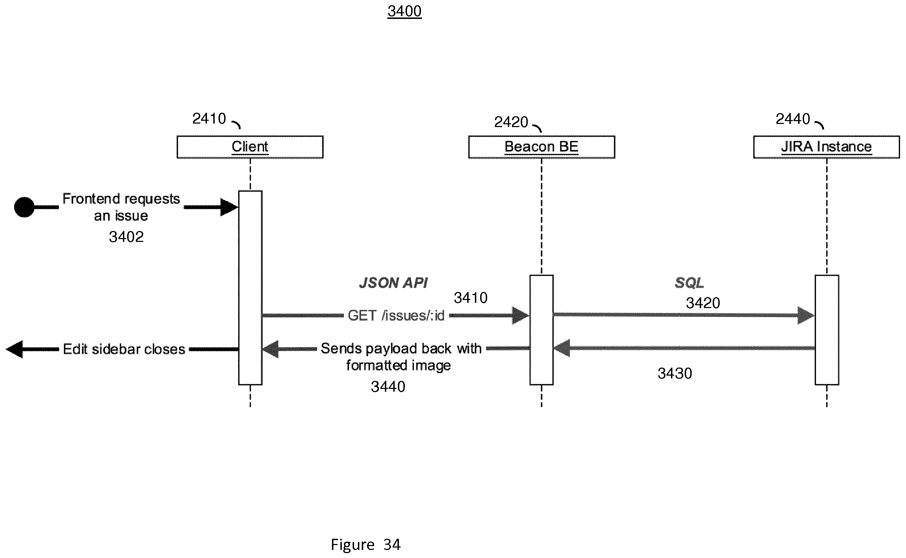

Figure 34 is a state diagram 3400 representing what happens when a client requests 3402 information about a particular issue. The GET command 3410 from the client's JSON API to the Gliffy Project server causes the Gliffy Project server 2420 to make a direct query 3420 to JIRA 2430. The resulting payload 3430 may be a list of all issues associated with the particular image. The issues and image may then be formatted and returned 3440 to the client for display.

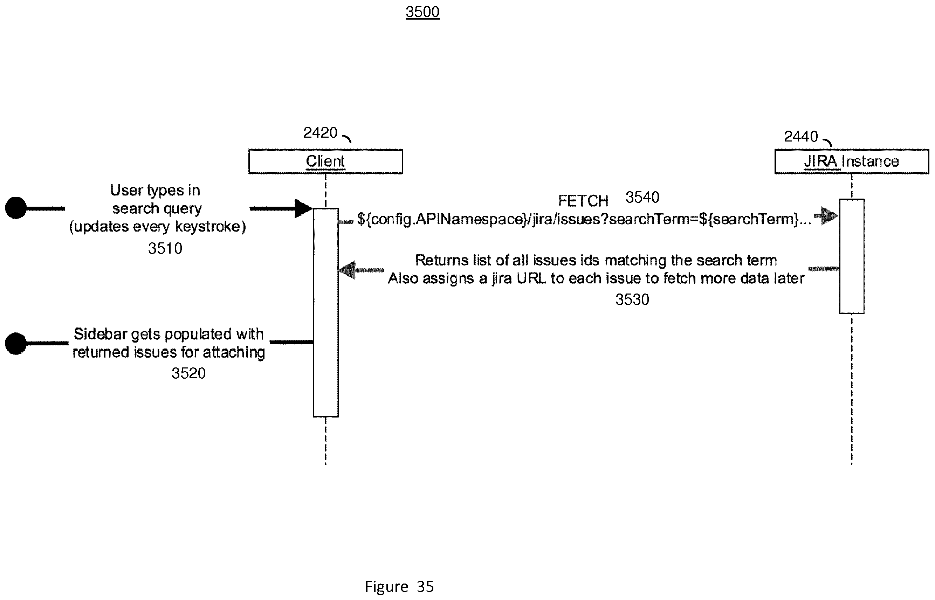

Figure 35 represents the flow 3500 when a user wishes to issue 3510 a search query. The client may send a FETCH command directly to JIRA 2430 without involving the Gliffy Project server 2420.. The JIRA instance 2430 may then return a list of all issue IDs matching the search term. The results may include issue IDs as well as the related text, enabling the ablity to fetch more data at a later time. Client software may then be formatted with the information returned from JIRA to for example, populate 3520 the sidebar with the list of issues responsive to the search query 3510.

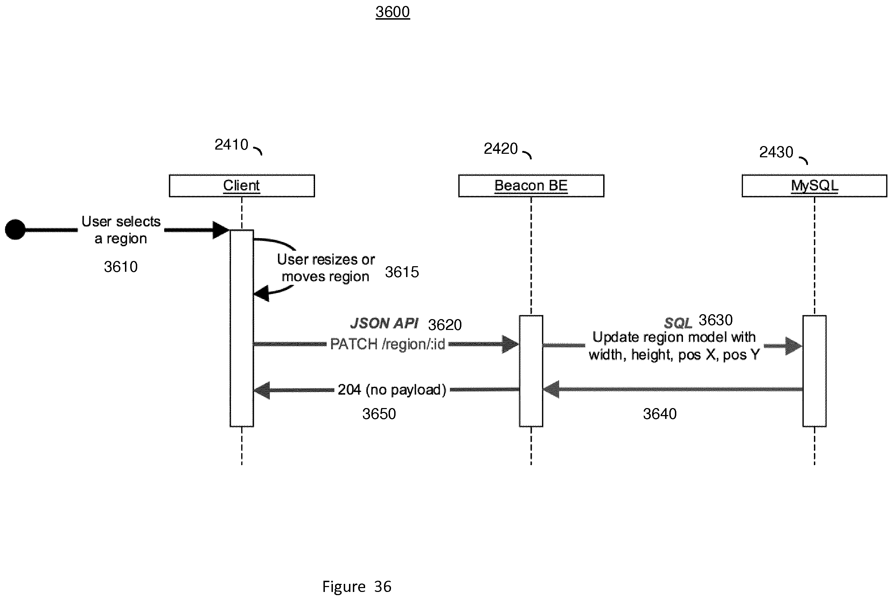

Figure 36 is a flow diagram 3600 illustrating how a user may modify a region. Here the user selects 3610 an existing region, and they indicate that they wish to move or resize it 3615. A PATCH region command 3620 is issued to the Gliffy Project server, which then accesses 3630 the MySQL database updating the region model with the new width, height, and X and Y position. An acknowledgment is then returned to the client 3640, 3650.

### Advantages

It can now be appreciated that the graphical project management tool described above places process flows, designs and a team's whiteboard drawings at the center of their work, by ticketing to a project's "big picture." By presenting a visual representation of a scope of work to be done, rather than a list of tasks alone, it is now far easier for team members to understand the status of a project.

The graphical project management tool permits team members to resolve problems and questions such as:
- What is the plan we are working on? - For Persona: Plan maker (Engineering Manager or Product manager) and the rest of team.
- How do "my" assigned tasks fit into the overall plan? - For Persona: Team Engineers and other scrum team members.
- What is the status of this project? For Persona: All
- If the plan is not going well...how do I/we fix it? - For Persona: Scrum master/ product manager and engineering leaders.

The tool can also support a deeper purpose - team harmony - with overarching benefits such as:
- Improved organization wide communication
- Solid understanding of technical infrastructure (for non-engineer stakeholders)
- Clear project overview for managers and team members
- Time and effort saved by engineering (particularly senior members of the team)

Because the tool puts visuals that describe a project "front-and-center" - whether it's a system architecture, process flow or front-end design, the project team can now work visually. Some other benefits include:
Single "source of truth" for project status.

Update JIRA items directly inside the canvas, helping the team save time and maintain valuable context.

Aligning the team from small details to the big picture - the team can easily align, and execute on critical tasks together.

Valuable status updates and project overviews so the team can focus attention on what's critical.

Other Features include:
- Integration with JIRA or other project management tools
- Enabling your organizations access to JIRA with a single interface that syncs all JIRA issues, tasks and stories
- Importing images from Gliffy, Sketch, Visio, or photos of a whiteboard sketches, .PNGs, JPEGs, and other images.
- Auto-syncing - provides automatic updates from your process flows to JIRA
- Custom filters that provide the ability to what has changed and why it matters
- Status updates for any project, and every role. Status updates makes it easy for managers to know "how it's going"... and if needed where to focus their time to make it run better.

### Implementation Alternatives

The foregoing description provides illustration and description of systems and methods for implementing a Graphical Mangement Tool, but is not intended to be exhaustive or to limited to the precise form disclosed.

For example, it should be understood that the embodiments described above may be implemented in many different ways. In some instances, the various "data processing systems" such as servers, databases, client machines, and data stores described herein may each be implemented by a separate or shared physical or virtual general purpose computer having a central processor, memory, disk or other mass storage, communication interface(s), input/output (I/O) device(s), and other peripherals. The general purpose computer is transformed into the processors with improved functionality, and executes the processes described above to provide improved operations. The processors may operate, for example, by loading software instructions, and then executing the instructions to carry out the functions described.

As is known in the art, such a computer may contain a system bus, where a bus is a set of hardware lines used for data transfer among the components of a computer or processing system. The bus or busses are shared conduit(s) that connect different elements of the computer system (e.g., processor, disk storage, memory, input/output ports, network ports, etc.) that enables the transfer of information between the elements. One or more central processor units are attached to the system bus and provide for the execution of computer instructions. Also attached to system bus are typically I/O device interfaces for connecting various input and output devices (e.g., keyboard, mouse, displays, printers, speakers, etc.) to the computer. Network interface(s) allow the computer to connect to various other devices attached to a network. Memory provides volatile storage for computer software instructions and data used to implement an embodiment. Disk or other mass storage provides non-volatile storage for computer software instructions and data used to implement, for example, the various procedures described herein.

Embodiments of the components may therefore typically be implemented in hardware, firmware, software, or any combination thereof. In some implementations, the computers that execute the processes described above may be deployed in a cloud computing arrangement that makes available one or more physical and/or virtual data processing machines via a convenient, on-demand network access model to a shared pool of configurable computing resources (e.g., networks, servers, storage, applications, and services) that can be rapidly provisioned and released with minimal management effort or service provider interaction. Such cloud computing deployments are relevant and typically preferred as they allow multiple users to access computing. By aggregating demand from multiple users in central locations, cloud computing environments can be built in data centers that use the best and newest technology, located in the sustainable and/or centralized locations and designed to achieve the greatest per-unit efficiency possible.

Furthermore, firmware, software, routines, or instructions may be described herein as performing certain actions and/or functions. However, it should be appreciated that such descriptions contained herein are merely for convenience and that such actions in fact result from computing devices, processors, controllers, or other devices executing the firmware, software, routines, instructions, etc.

It also should be understood that the block and network diagrams may include more or fewer elements, be arranged differently, or be represented differently. It further should be understood that certain implementations may dictate the block and network diagrams and the number of block and network diagrams illustrating the execution of the embodiments be implemented in a particular way.

Other modifications and variations are possible in light of the above teachings. For example, while a series of steps has been described above with respect to the flow diagrams, the order of the steps may be modified in other implementations. In addition, the steps, operations, and steps may be performed by additional or other modules or entities, which may be combined or separated to form other modules or entities. For example, while a series of steps has been described with regard to certain Figures, the order of the steps may be modified in other implementations consistent with the principles of the invention. Further, non-dependent steps may be performed in parallel. Further, disclosed implementations may not be limited to any specific combination of hardware.

Certain portions may be implemented as "logic" that performs one or more functions. This logic may include hardware, such as hardwired logic, an application-specific integrated circuit, a field programmable gate array, a microprocessor, software, wetware, or a combination of hardware and software. Some or all of the logic may be stored in one or more tangible non-transitory computer-readable storage media and may include computer-executable instructions that may be executed by a computer or data processing system. The computer-executable instructions may include instructions that implement one or more embodiments described herein. The tangible non-transitory computer-readable storage media may be volatile or non-volatile and may include, for example, flash memories, dynamic memories, removable disks, and non-removable disks.

Accordingly, further embodiments may also be implemented in a variety of computer architectures, physical, virtual, cloud computers, and/or some combination thereof, and thus the computer systems described herein are intended for purposes of illustration only and not as a limitation of the embodiments.

Also, the term "user", as used herein, is intended to be broadly interpreted to include, for example, a computer or data processing system or a human user of a computer or data processing system, unless otherwise stated.

## Claims

1. A method for providing a graphical project management tool, the method executing on one or more data processors, the method comprising:
receiving a representative image for a project;
obtaining information defining a region of the representative image;
designated the region as a hotspot; and
associating one or more task definitions for the project with the hotspot.

2. The method of claim 1 additionally comprising:
obtaining at least one of the task definitions via an application program interface to a project tracking tool that operates independently of the graphical project management tool.

3. The method of claim 1 additionally comprising:
obtaining a first task definition from a first project tracking tool; and
obtaining a second task definition from a second project tracking tool.

4. The method of claim 1 wherein the representative image is a stateflow diagram for a software application.

5. The method of claim 1 wherein the representative image is imported from a drawing tool.

6. The method of claim 1 additionally comprising:
displaying a graphical representation of hotspot overlaid onto the representative image together with the task definitions.

7. The method of claim 6 additionally comprising:
accepting input from a user to determing a selected hotspot; and
visually highlighting the tasks associated with the selected hotspot.

8. The method of claim 6 wherein the graphical representation of the hotspot further includes a visual indication of a number of tasks associated with the hotspot.

9. The method of claim 6 additionally comprising:
accepting input from a user specifying that only a certain subset of the tasks associated with the hotspot are to be displayed djacent the representative project diagram.

10. A graphical project management system comprising an interface to a client processor, one or more server processors, a program memory, a database, and a project task tracking system,
wherein the one or more server processors are operably coupled to the client processor, the database, the task tracking system, and the program memory to execute program code to:
receive, from the task tracking system, one or more task definitions for the project;
receive, from the client processor:
(a) an identification of a representative image for a project;
(b) information defining a hotspot region of the representative image;
(c) an input indicating that one or more of the task definitions are related to the hotspot region of the representative image;
send, to the database, the information defining the hotspot region and the one or more task definitions.

11. The system of claim 10 additionally comprising an image store, and wherein the one or more server processors are operatively coupled to the image store, and to execute the program code to further:
send, to the image store, the representative image;
receive, from the image store, location information for the representative image; and
send, to the database, the location information for the representative image to be related to the information definiting the hotspot region.
